# EUROPEAN PATENT SPECIFICATION

(11) **EP 1 407 919 B1**
(45) Date of publication and mention of the grant of the patent: **16.12.2009**
(21) Application number: 02730889.9
(22) Date of filing: 03.06.2002
(51) Int. Cl.: B60N 2/06, B60N 2/44, A47C 1/022, G05G 5/02

(54) **OPERATING LEVER AND SEAT HAVING THE SAME**
BETÄTIGUNGSHEBEL UND DIESEN AUFWEISENDER SITZ
LEVIER DE COMMANDE ET SIEGE EQUIPE D'UN TEL LEVIER

(30) Priority: 11.06.2001 JP 2001175809
(43) Date of publication of application: 14.04.2004
(73) Proprietor: TS Tech Co., Ltd, Asaka-shi, Saitama 351-0012 (JP); HONDA GIKEN KOGYO KABUSHIKI KAISHA, Minato-ku, Tokyo 107-0062 (JP)
(72) Inventor: OMORI, Misao c/o Technical Ctr TS Tech Co., Ltd,, Tochigi 329-1217 (JP); TAKAKURA, Masayuki c/o Kabushiki Kaisha Honda, Wako-shi, Saitama 351-0113 (JP); WAKU, Seiji c/o Kabushiki Kaisha Honda, Wako-shi, Saitama 351-0113 (JP)
(74) Representative: Serjeants
(86) International application number: PCT/JP2002/005455
(87) International publication number: WO 2002/100676

(56) References cited:
- EP-A- 0 844 134
- WO-A-00/30889
- WO-A-93/12952
- GB-A- 2 324 720
- JP-A- 8 103 341
- JP-A- 57 167 831
- JP-U- 2 033 652
- JP-U- 2 124 727
- JP-U- 57 168 436
- JP-U- 58 043 526
- US-A- 4 786 109
- US-A- 5 131 785

## Description

### Technical Field

This invention relates to an operating lever and a seat provided with the operating lever and, more particularly, to an operating lever which is provided at an automotive seat as means to actuate a driven mechanism of a seat such as a reclining mechanism or a lock-releasing mechanism for releasing the seat from a condition in which the seat is locked with respect to a slide rail mechanism.

### Background Art

In an automotive seat, an operating lever is provided as means to actuate a driven mechanism such as a reclining mechanism for allowing a seat back of the seat to be reclined forwardly and rearwardly and adjusting a reclination of the seat back, or a lock-releasing mechanism for adjusting forward and rearward positions of the whole seat along a slide rail mechanism. The operating lever is adapted to be able to actuate the driven mechanism by quick-operation such as pulling-up of the operating lever and rotating of the operating lever.

Since the conventional seat is provided with the operating lever, there is proposed, according to specifications for models of cars, a front seat which is lock-released from a slide rail mechanism from a rear side of the front seat and is slid forwardly along the slide rail mechanism. The operating lever is preferably provided at an upper portion of a side of a seat back of the front seat. When the operating lever is provided at the upper portion of the side of the seat back, the operating lever can be simply actuated from a rear side of the seat. Also, the provision of the operating lever at the upper portion of the side of seat back is preferred from the standpoint of convenience. However, when the operating lever for the seat is provided at the upper portion of the side of the seat back as means to be quickly operated, a passenger who is to sit on a rear seat may unintentionally touch the operating lever with the passenger's hand and unintentionally cause the operating lever to be actuated. Seats with operating levers are known from JP 57-167831 A, GB 2 324 720 A, WO 93/12952 A, JP 08-103341 A and US 4 786 109 A.

It is an object of the present invention to provide an operating lever which is adapted to not be operated so as to drive a driven mechanism when a passenger unintentionally touches the operating lever, and a seat provided with such an operating lever.

### Disclosure of Invention

In accordance with one aspect of the present invention, there is provided an operating lever. The operating lever serves as means to actuate a driven mechanism having an operating shaft urged by first return spring means. The operating lever comprises a lever base having a boss portion, a lever body having first and second end portions, a setting plateau for carrying the lever base and the lever body thereon, the setting plateau having a pair of spaced apart bank portions bulged vertically from a surface thereof, a recess portion between the spaced apart bank portions, and an opening formed therein, the lever base carried on the surface of the setting plateau with the boss portion being rotatably received in the opening of the setting plateau, the lever body carried on the surface of the setting plateau with the first end portion being received in the recess portion of the setting plateau, the lever body pivotally supported at the second end portion thereof to the lever base by a supporting shaft, whereby the lever body can be pivoted in such a direction as to be away from the surface of the setting plateau, and second return spring means mounted on the supporting shaft, the operating shaft received in the boss portion of the lever base, wherein when the lever body is pivoted in the direction against an action of the second return spring means and swung about the opening of the setting plateau in a predetermined direction in such a manner that the first end portion gets over one of the spaced apart bank portions, the operating shaft is rotated against an action of the first return spring means, whereby the driven mechanism is actuated.

In the operating lever, since the lever base which receives the operating shaft of the driven mechanism is adapted to be rotated by operation which comprises the causing of the lever body to be pivoted in such a direction as to be away from the surface of the setting plateau and the causing of the lever body to be swung in the predetermined direction in such a manner that the first end portion gets over the one of the spaced apart bank portions, when the passenger touches the lever body so as to push the lever body forwardly, the lever body is prevented from being swung. Therefore, erroneous operation of the operating lever is prevented.

The lever base may have a jaw portion projecting in such a direction as to be off-centered relative to the boss portion, and a substantially U-shaped recess portion formed in the jaw portion. The lever body is pivotally supported to the lever base by the supporting shaft in a condition in which the second end portion of the lever body is received in the substantially U-shaped recess portion of the lever base and spaced away from an innermost region of the substantially U-shaped recess portion at a distance allowing the pivotal movement of the lever body. Therefore, the pivotal movement of the lever body and the swinging of the lever body can be positively carried out.

The operating lever may have a circular arc-shaped projecting edge which is slid on the one of the spaced apart bank portions when the lever body is swung in the predetermined direction. Therefore, the swinging of the lever body and returning movement of the lever body can be smoothly performed.

The first end portion of the lever body may be received in the recess portion of the setting plateau with a space being left between the one of the spaced apart bank portions and a side of the first end portion, whereby the lever body can be shifted laterally. The side of the first end portion has an engaging protrusion. The one of the spaced apart bank portions has an engaging hole formed in a side thereof. Therefore, when the passenger unintentionally touches the lever body so as to push the lever body forwardly, the engaging protrusion of the lever body is operatively engaged with the engaging hole of the one of the spaced apart bank portions, whereby the swinging of the lever body can be securely prevented. Therefore, erroneous operation of the operating lever is prevented.

The other of the spaced apart bank portions may be bulged largely as compared to the one of the spaced apart bank portions..Therefore, when the lever body is be to returned to an original position, the lever body is abutted against the other of the spaced apart bank portion which is bulged largely, whereby the lever body can be securely returned to the original position on the setting plateau.

In accordance with another aspect of the present invention, there is provided with a seat. The seat comprises a seat cushion, a seat back, a slide rail mechanism for allowing the seat to be slid along the slide rail mechanism, a locking mechanism for locking the seat with respect to the slide rail mechanism and preventing the seat from sliding along the slide rail mechanism, a lock-releasing mechanism for releasing the seat from a condition in which the seat is locked with respect to the slide rail mechanism by the locking mechanism, and allowing the seat to become slidable along the slide rail mechanism, the lock-releasing mechanism including an operating shaft by urged by first return spring means, and an operating lever provided at an upper portion of a side of the seat back for actuating the lock-releasing mechanism. The operating lever comprises a lever base having a boss portion, a lever body having first and second end portions, a setting plateau for carrying the lever base and the lever body thereon, the setting plateau having a pair of spaced apart bank portions bulged vertically from a surface thereof, a recess portion between the spaced apart bank portions, and an opening formed therein, the lever base carried on the surface of the setting plateau with the boss portion being rotatably received in the opening of the setting plateau, the lever body carried on the surface of the setting plateau with the first end portion being received in the recess portion of the setting plateau, the lever body pivotally supported at the second end portion thereof to the lever base by a supporting shaft, whereby the lever body can be pivoted in such a direction as to be away from the surface of the setting plateau, and second return spring means mounted on the supporting shaft, the operating shaft received in the boss portion of the lever base, wherein when the lever body is pivoted in the direction against an action of the second return spring means and swung about the opening of the setting plateau in a predetermined direction in such a manner that the first end portion gets over one of the spaced apart bank portions, the operating shaft is rotated against an action of the first return spring means, whereby the lock-releasing mechanism is actuated.

In the seat provided with the operating lever, since the lever base which receives the operating shaft of the lock-releasing mechanism is adapted to be rotated by operation which comprises the causing of the lever body to be pivoted in such a direction as to be away from the surface of the setting plateau and the causing of the lever body to be swung in the predetermined direction in such a manner that the first end portion gets over the one of the spaced apart bank portions, when the passenger unintentionally touches the lever body so as to push the lever body forwardly, the lever body is prevented from being swung. Therefore, erroneous operation of the operating lever is prevented.

### Brief Description of Invention

These and other objects and many of the attendant advantages of the present invention will be readily appreciated as the same becomes better understood by reference to the following detailed description when considered in connection with the accompanying drawings, in which like reference numerals designate the same part throughout the Figures and wherein:
Fig. 1 is a schematic side view of an automotive seat to which an operating lever according to the present invention is applied;
Fig. 2 is a schematic perspective view of a seat back having the operating lever;
Fig. 3 is a schematic front view of the operating lever;
Fig. 4a is a schematic side view of a lever base of the operating lever;
Fig. 4b is a schematic sectional side view of the lever base;
Fig. 4c is a schematic front view of the lever base;
Fig. 4d is a schematic rear view of the lever base;
Fig. 5a is a schematic sectional side view of a lever body of the operating lever;
Fig. 5b is a schematic rear view of the lever body;
Fig. 5c is a schematic side view of the lever body;
Fig. 6a is a schematic front view of a setting plateau of the operating lever;
Fig. 6b is a schematic plan view of the setting plateau;
Fig. 6c is a schematic side view of the setting plateau;
Fig. 7a is a schematic front view of a combination comprising the lever base and the lever body;
Fig. 7b is a schematic sectional side view of the combination;
Fig. 7c is a schematic rear view of the combination;
Fig. 8a is a schematic plan view of the operating lever;
Fig. 8b is a schematic sectional side view of the operating lever;
Fig. 9 is a schematic perspective view of a seat back frame provided with the operating lever;
Fig. 10 is a schematic rear view of a bracket plate;
Fig. 11 is a schematic side view and of assistance in explaining a condition in which the operating lever is mounted on the bracket plate;
Fig. 12a is a schematic perspective view of the operating lever in an unoperated state;
Fig. 12b is a schematic side view of the operating lever and of assistance in explaining a condition in which the lever body is moved away from the plateau; and
Figs. 12c and 12d are each a schematic perspective view of the operating lever and of assistance in explaining a condition in which the lever body is swung in a direction a.

### Best Mode for Carrying Out the Invention

An operating lever according to the present invention will be discussed hereinafter with reference to the accompanying drawings.

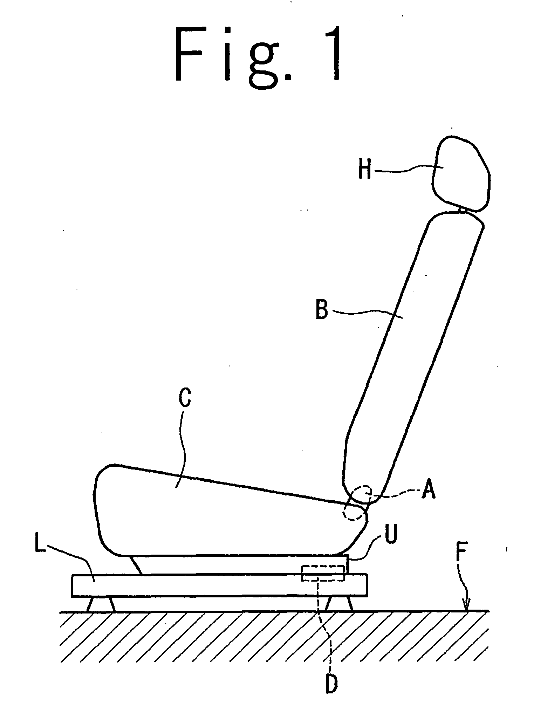

Referring to Fig. 1, there is illustrated an automotive seat to which an operating lever according to the present invention is applied. The automotive seat is to be employed as a front seat and includes a seat cushion C, a seat back B, and a head rest H. The automotive seat is supported to a slide rail mechanism which includes a pair of upper rail members U (only one upper rail member U is shown in Fig. 1) and a pair of lower rail members L (only one lower rail member L is shown in Fig. 1). The upper rail members U are mounted on a bottom surface of the seat cushion C of the automotive seat so as to be spaced apart from each other. The lower rail members L are seated on a floor F of an automobile so as to be spaced apart from each other. The upper rail members U attached to the seat cushion C are slidably engaged with the lower rail members L, so that the automotive seat can be slid along the lower rail members L. The automotive seat further includes a reclining mechanism A for causing the seat back B to be reclined with respect to the seat cushion C, a locking mechanism D for locking the automotive seat with respect to the lower rail members L and preventing the movement of the automotive seat along the lower rail members L, and a lock-releasing mechanism (not shown) for releasing the automotive seat from a condition in which the automotive seat is locked with respect to the lower rail members L by the locking mechanism, and allowing the automotive seat to become slidable along the lower rail members L. In the illustrated embodiment, the lock-releasing mechanism is employed as a driven mechanism which is actuated by the operating lever according to the present invention. The reclining mechanism A may be employed as a driven mechanism which is actuated by the operating lever according to the present invention. As the locking mechanism D and the reclining mechanism A, there may be employed any suitable conventional locking mechanism and reclining mechanism.

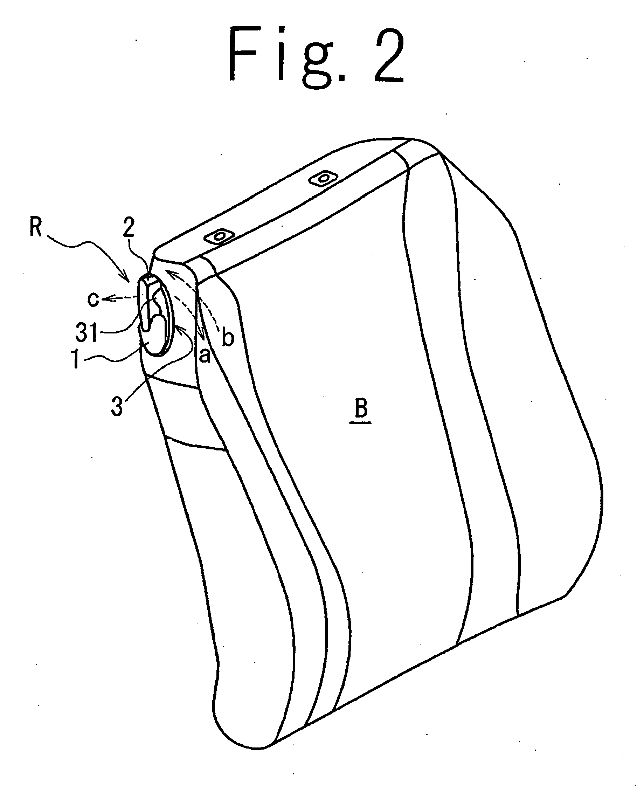

Referring now to Fig. 2, the operating lever R is provided at an upper portion of a side of the seat back B. In Fig. 2, the head rest H is removed for clarity of illustration. The operating lever R is adapted to be operated from a rear side of the seat back B. In the illustrated embodiment, when a lever body 2 of the operating lever R is swung in a direction a by a hand of a passenger, the lock-releasing mechanism is adapted to be actuated so as to cause the automotive seat to be released from the situation in which the automotive seat is locked relative to the lower rail members by the locking mechanism, and when the operating lever R is released from the passenger's hand, it is adapted to be automatically swung in a direction b by spring means which will be discussed in greater detail hereinafter.

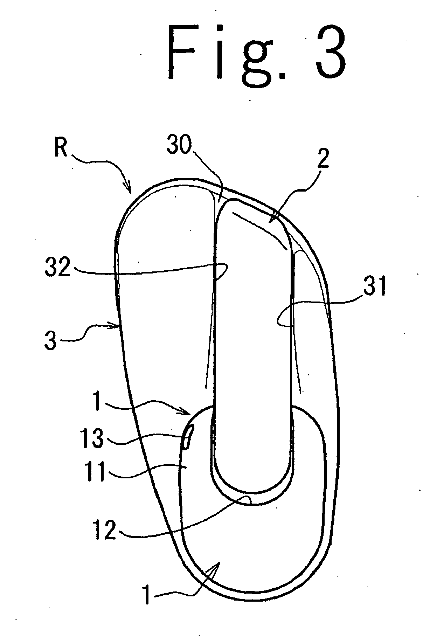

Referring to Fig. 3, the operating lever R comprises a lever base 1 which is formed into a substantially U-shape when viewed from the front side, a lever body 2 which is formed into a substantially rectangular shape when viewed from the front side, and a setting plateau 3 which is formed into a substantially elliptic shape when viewed from the front side. The base 1, the lever body 2 and the plateau 3 are made of synthetic resin material such as polyethylene.

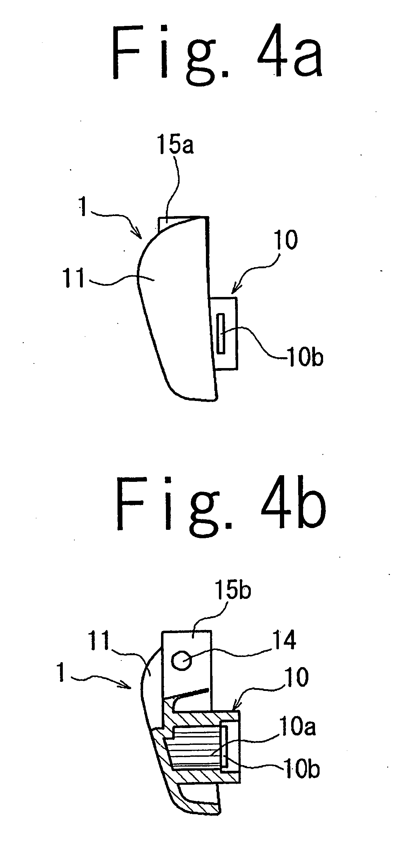

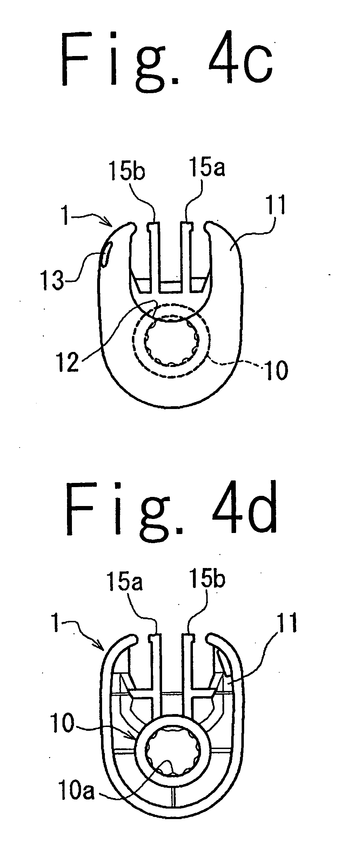

Referring to Figs. 4a to 4d, there is illustrated the lever base 1. The lever base 1 is of shell construction having an outer wall 1a of a substantially hemispherial shape. Projected outwardly from an interior of the outer wall 1a is a substantially cylindrical boss portion 10 which receives and bears an operating shaft (not shown) of the lock-releasing mechanism as will be discussed in greater detail hereinafter. As shown in Figs. 4b and 4d, the boss portion 10 has protrusions 10a which are disposed around an inner surface of a peripheral wall of the boss portion 10 and extend along a longitudinal direction of the boss portion 10, so that the operating shaft of the lock-releasing mechanism which is received in the boss portion 10 is tightly borne by the boss portion 10. As shown in Figs. 4a and 4b, the boss portion 10 has a pair of slits 10b (only one slit 10b is shown in Figs. 4a and 4b) which are formed in opposed regions of the peripheral wall of the boss portion 10. A spring ring (not shown) in the form of a substantially Ohm symbol is mounted on the boss portion 10 and engaged with the slits 10b of the boss portion 10 and the operating shaft which is received in the boss portion 10. As shown in Fig. 4c, the outer wall 1a of the lever base 1 has a jaw portion 11 which extends as a continuation of the outer wall 1a in such a direction as to be off-centered relative to the boss portion 10 and which is formed with a substantially U-shaped recess portion 12 in which an base end portion of the lever body 2 is received as will be discussed in greater detail hereinafter. The jaw portion 11 of the base 1 is formed with a hole 13. Two ribs 15a, 15b are radially projected from the boss portion 10 and extend into the recess portion 12. As shown in Fig. 4b, each of the ribs 15a, 15b is formed with a hole 14 (the hole 14 formed in the rib 15b only is shown in Fig. 4b).

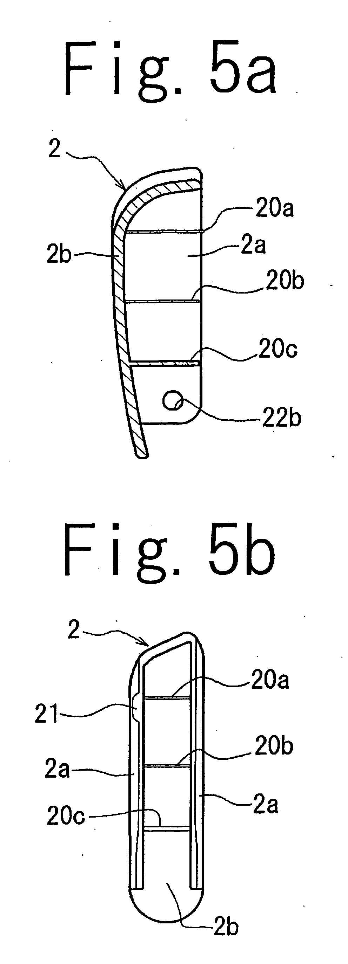

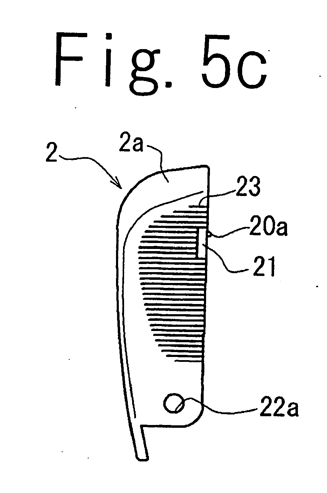

Referring to Figs. 5a to 5c, there is illustrated the lever body 2. The lever body 2 is formed into a substantially rectangular box-form in outline and opened at two sides thereof. More particularly, the lever body 2 comprises a pair of spaced apart sections 2a and an intermediate section 2b interconnecting the spaced apart sections 2a. As shown in Figs. 5a and 5c, the spaced apart sections 2a have holes 22a, 22b formed in end portions thereof. The lever body 2 is pivotally supported to the base 1 by causing the base end portion of the lever body 2 to be received in the recess portion 12 of the base 1 and causing a supporting shaft (not shown) to be inserted through the hole 13 of the jaw portion 11, the holes 14 of the ribs 15a, 15b of the base 1, and the holes 22a, 22b of the spaced apart sections 2a of the lever body 2. As shown in Figs. 5a and 5b, three reinforcing ribs 20a, 20b, 20c are provided in an interior of the lever body 2. More particularly, the reinforcing ribs 20a, 20b, 20c are spaced apart from one another in a longitudinal direction of the lever body 2. As shown in Figs. 5a and 5c, an edge portion of the reinforcing rib 20a adjacent to a free end portion of the lever body 2 is projected outwardly from the spaced apart sections 2a of the lever body 2. The projecting edge portion of the reinforcing rib 20a presents a circular arc. As shown in Figs. 5b and 5c, one of the spaced apart sections 2a is provided with an engaging protrusion 21 which is projected laterally from an outer surface of the section 2a. As shown in Fig. 5c, the spaced apart sections 2a (only one section 2a is shown in Fig. 5c) have knurled portions 23 on the outer surfaces thereof.

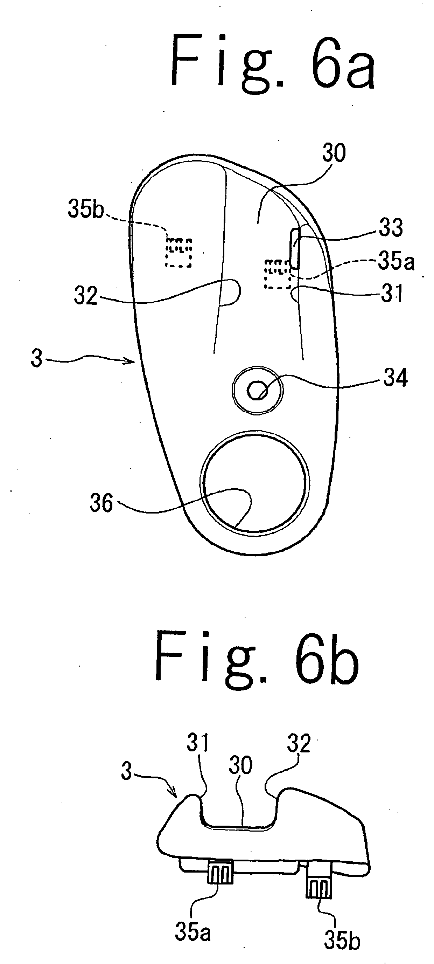

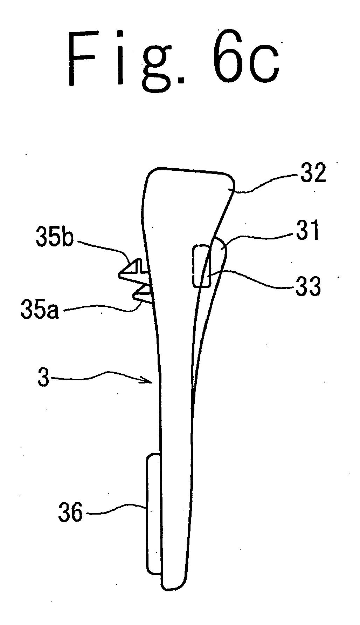

Referring to Figs. 6a to 6c, there is illustrated the plateau 3 of the operating lever. The plateau 3 has a pair of spaced apart bank portions 31, 32 which are vertically bulged from a surface of the plateau 3 and between which a recess portion 30 is disposed. As shown in Fig. 3, the free end portion of the lever body 2 is received in the recess portion 30 of the plateau 3. As shown in Figs. 6a and 6c, one of the bank portions 31, 32 or the bank portion 31 has an engaging hole 33 formed in an inner side thereof. When the lever body 2 is swung in the direction a (Fig. 2), the engaging protrusion 21 of the lever body 2 is adapted to be operatively engaged with the engaging hole 33 of the bank portion 31. As shown in Fig. 6b, the bank portion 32 is bulged largely as compared to the bank portion 31. As shown in Fig. 6a, a stepped hole 34 is formed in a substantially center portion of the plateau 3. As shown in Figs. 6b and 6c, two engaging hooks 35a, 35b are provided on and projected from a surface of the plateau 3 which is opposite to the surface of the plateau 3 on which the bank portions 31, 32 are provided. Furthermore, an opening 36 is formed in the plateau 3 as shown in Fig. 6a. As will be discussed in greater detail hereinafter, the boss portion 10 of the lever base 1 is rotatably received in the opening 36 of the plateau 3.

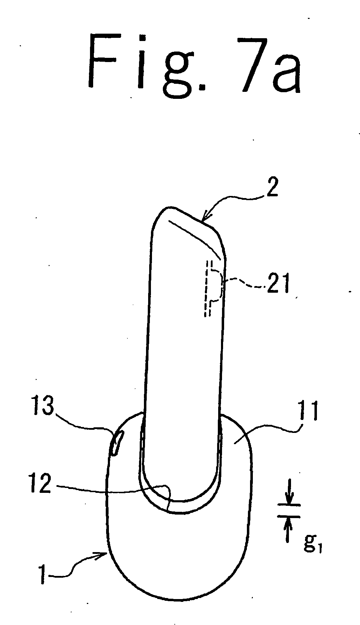

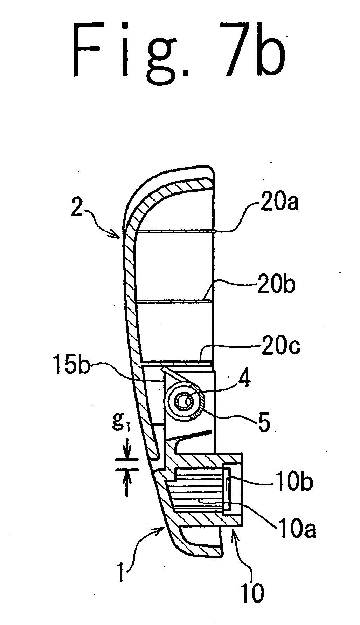

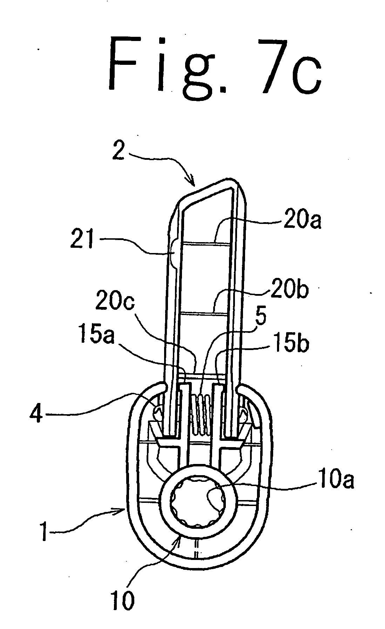

Referring to Figs. 7a to 7c, the lever body 2 is received at the base end portion thereof in the recess portion 12 of the base 1 and pivotally supported to the base 1 with a space g1 being left between the base end portion of the lever body 2 and an innermost region of the recess portion 12 of the base 1. More particularly, by causing the supporting shaft 4 (see Figs. 7b and 7c) to be inserted through the hole 13 of the base 1, the holes 22a, 22b of the lever body 2, and the holes 14 of the ribs 15a, 15b of the lever base 1 as described above, the lever body 2 is pivotally supported to the lever base 1 with the space g1 being left between the end portion of the lever body 2 and the innermost region of the recess portion 12 of the base in such a manner that the lever body 2 can be pivoted laterally or in such a direction as to be spaced away from the surface of the plateau 3. A return coil spring 5 is mounted around the supporting shaft 4 and disposed between the ribs 15a, 15b of the lever base 1.

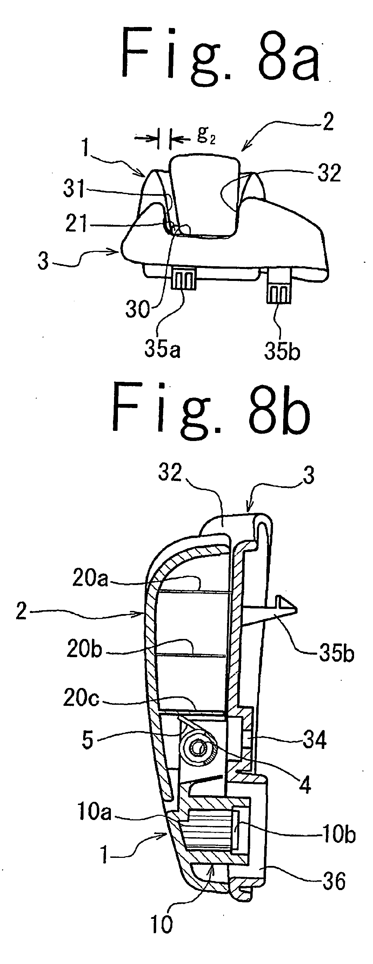

Referring to Figs. 8a and 8b, an assembly comprising the lever base 1 and the lever body 2 is carried on the plateau 3 with the free end portion of the lever body 2 being received in the recess portion 30 between the bank portions 31, 32 of the plateau 3 and with the boss portion 10 of the base 1 being rotatably received in the opening 36 of the plateau 3. More particularly, the free end portion of the lever body 2 is received in the recess portion 30 of the plateau 3 with a space g2 being left between a side of the free end portion of the lever body 2 and the bank portion 31, so that the free end portion of the lever body 2 is allowed to be shifted in a width direction by a distance corresponding to the space g2 in the recess portion 30 of the plateau 3. Furthermore, the free end portion of the lever body 2 is received in the recess portion 30 of the plateau 3 with the engaging protrusion 21 of the lever body 2 being aligned with the engaging hole 33 formed in the bank portion 31 of the plateau 3.

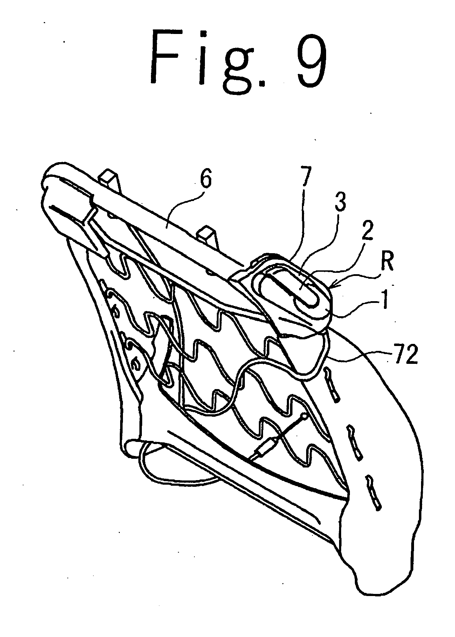

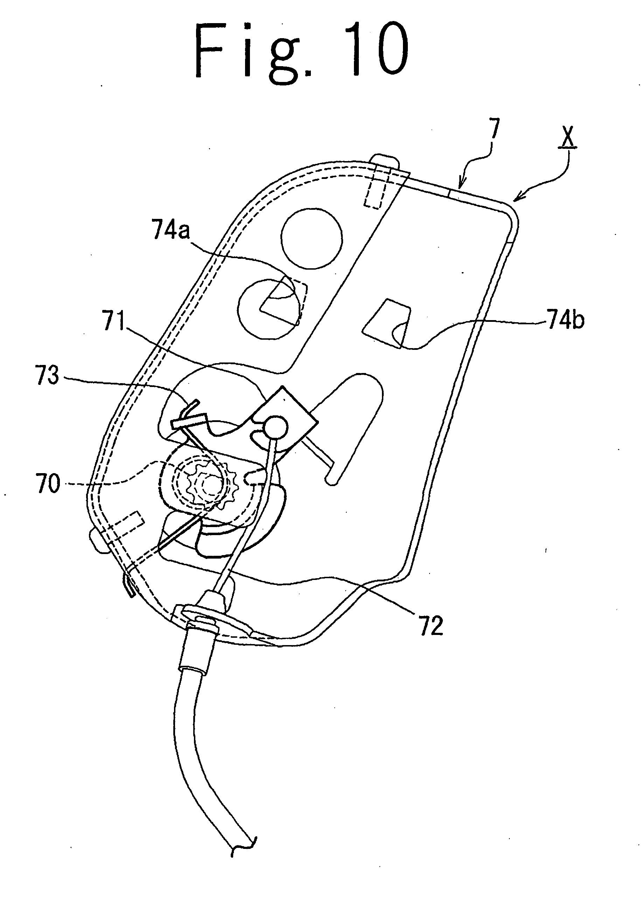

Referring to Figs. 9 to 11, there is illustrated the lock-releasing mechanism X. The operating lever R constructed as discussed above is mounted on a bracket plate 7 of the lock-releasing mechanism X. The lock-releasing mechanism X includes the bracket plate 7 attached to one of shoulders of a seat back frame 6, the operating shaft 70 rotatably penetrating the bracket plate 7, a turning plate 71 mounted on the operating shaft 70, a wire 72 connected at one end portion thereof to the turning plate 71 and coupled at the other end thereof to the locking mechanism (not shown), and a return spring 73 provided between the turning plate 71 and the bracket plate 7.

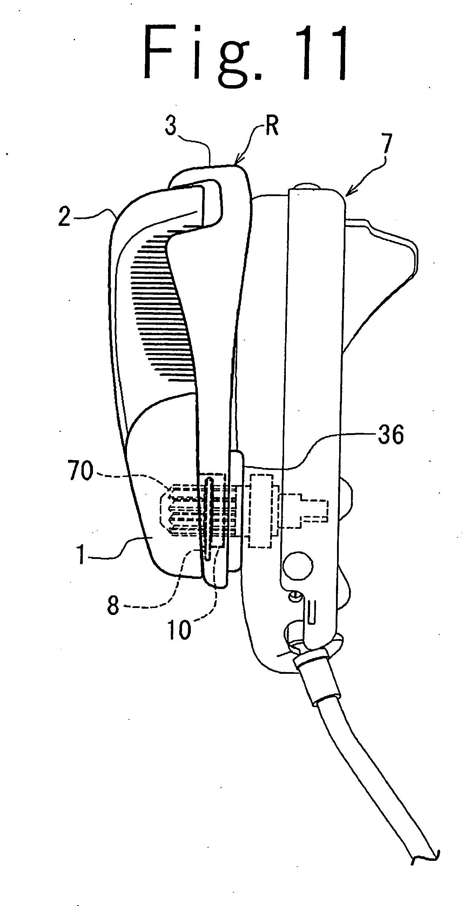

The bracket plate 7 is formed with engaging holes 74a, 74b with which the engaging hooks 35a, 35b of the plateau 3 are engaged. Each of the engaging holes 74a, 74b is formed into a substantially trapezoidal shape. The plateau 3 is attached to the bracket plate 7 by causing the engaging hooks 35a, 35b of the plateau 3 to be inserted in wider portions of the trapezoidal engaging holes 74a, 74b of the bracket plate 7, causing the engaging hooks 35a, 35b of the plateau 3 to be shifted to narrow portions of the trapezoidal engaging holes 74a, 74b of the bracket plate 7, and causing the engaging hooks 35a, 35b to be engaged with the engaging holes 74a, 74b of the bracket plate 7. Furthermore, the plateau 3 is secured to the bracket plate 7 by a screw (not shown) which is inserted in the stepped hole 34 (see Fig. 6a) of the plateau 3 and threaded into a threaded hole (not shown) formed in the bracket plate 7. As shown in Fig. 11, the operating shaft 70 is press-fitted in the boss portion 10 of the lever base 1 which is rotatably received in the opening 36 of the plateau 3. As briefly described above, the spring ring 8 in the form of an Ohm symbol is mounted on the boss portion 10 of the lever base 1 and engaged through the slits 10b (see Fig. 4a) of the boss portion 10 with the operating shaft 70.

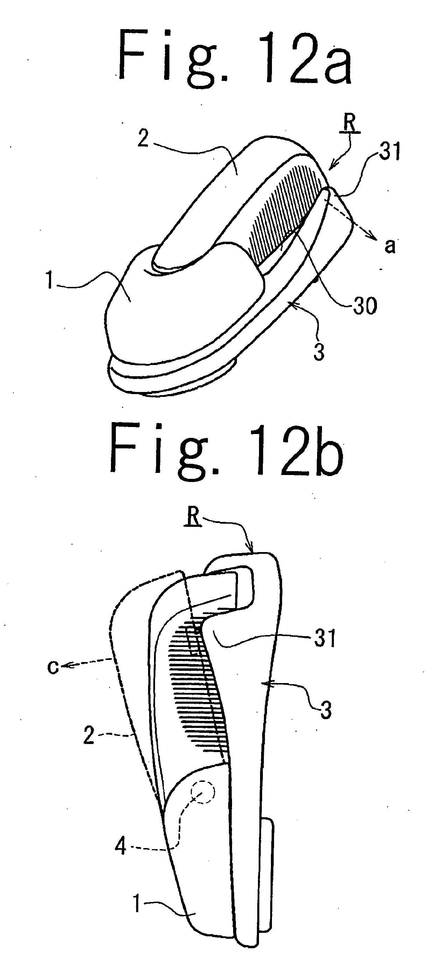

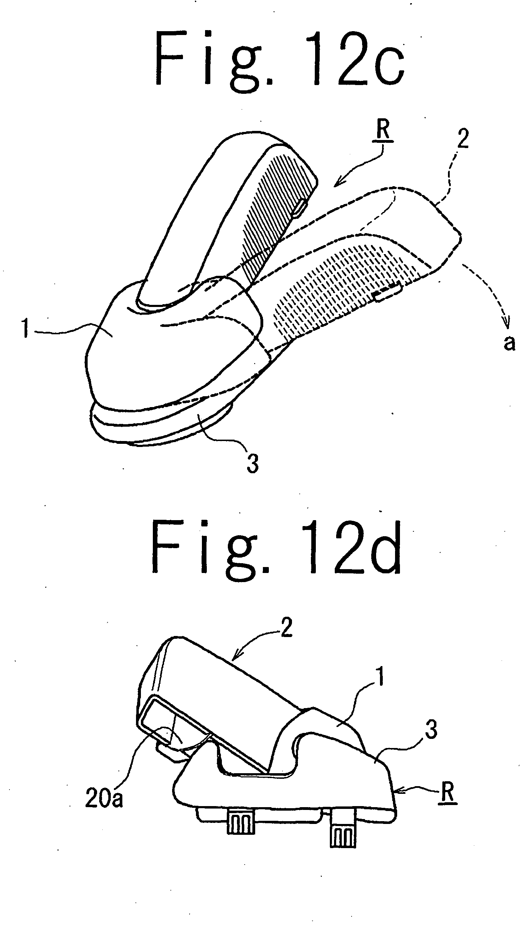

Referring to Fig. 12a, there is illustrated the operating lever R inan unoperated state. In this state, the free end portion of the lever body 2 is received in the recess portion 30 between the bank portions 31, 32, so that when the passenger unitentionally touches and pushes the lever body 2 with the passenger's hand in the direction a whereby the lever body 2 is swung in the direction a by the distance g2 (see Fig. 8a), the lever body 2 is abutted against the bank portion 31 and is not farther swung. At this time, since the engaging protrusion 21 of the lever body 2 is operatively engaged with the engaging hole 33 of the bank portion 31, the free end portion of the lever body 2 is securely prevented from getting over the bank portion 31.

Referring now to Figs. 12b to 12d, the operation of the operating lever R will be discussed hereinafter. In order to normally operate the operating lever R, it is necessary for the passenger to first cause the lever body 2 to be pivoted about the supporting shaft 4 in such a direction c that the free end portion of the lever body 2 moves away from the plateau 3. After the lever body 2 is pivoted about the supporting shaft 4 in the direction c, the passenger manually pushes the lever body 2 in the direction a so as to cause the free end portion of the lever body 2 to get over the bank portion 31, to thereby cause the lever body 2 to be pivoted about the opening 36 of the plateau 3 in the direction a. At this time, the circular arc-shaped edge portion of the reinforcing rib 20a which is projected from the lever body 2 is slid on the bank portion 31 of the plateau 3, so that the lever body 2 can be smoothly swung in the direction a. By the operating of the operating lever 2 as described above, the operating shaft 70 is rotated and the turning plate 71 is turned against an action of the return coil spring 73, whereby the wire 72 is pulled. The pulling of the wire 72 causes the locking-mechanism to release the automotive seat from the condition in which the automotive seat is locked with respect to the lower rail members L (Fig. 1). In this condition, the passenger can cause the automotive seat to be slid along the lower rail members L.

When the automotive seat is slid to a desired position by the passenger and the lever body 2 is released from the passenger's hand, the turning plate 71 is turned due to the action of the return spring 73 and the operating shaft 70 is rotated, whereby the lever body 2 is swung in the direction b (Fig. 2) while getting over the bank portion 31. At this time, the circular arc-shaped edge portion of the reinforcing rib 20a which is projected from the lever body 2 is slid on the bank portion 31 of the plateau 3, so that the lever body 2 can be smoothly swung in the direction b. When the lever body 2 is swung in the direction b, a side of the free end portion of the lever body 2 is abutted against a side of the bank portion 32 largely bulged as compared to the bank portion 31, and the lever body 2 is returned to an original position due to an action of the return coil spring 5.

While the operating lever is employed in the illustrated embodiment as means to actuate the lock-releasing mechanism for releasing the automotive seat from a condition in which the automotive seat is locked with respect to the lower rail members by the locking mechanism, and allowing the automotive seat to become slidable along the lower rail members, the operating lever may be employed as means to actuate various mechanisms other than the lock-releasing mechanism of the automotive seat.

It will thus be seen that the objects set forth above, and those made apparent from the preceding description, are efficiently attained and, since certain changes may be made in the above construction without departing from the scope of the invention, it is intended that all matter contained in the above description or shown in the accompanying drawings shall be interpreted as illustrative and not in a limiting sense.

## Claims

1. An operating lever (R) for actuating a driven mechanism having an operating shaft (70) urged by first return spring means (73), said operating lever (R) comprising:
a lever base (1) having a boss portion (10);
a lever body (2) having first and second end portions;
a setting plateau (3) for carrying said lever base (1) and said lever body (2) thereon;
said setting plateau (3) having a pair of spaced apart bank portions (31,32) bulged vertically from a surface thereof, a recess portion (30) between said spaced apart bank portions (31,32) and an opening (36) formed therein;
said lever base (1) being carried on said surface of said setting plateau (3) with said boss portion (10) being rotatably received in said opening (36) of said setting plateau (3);
said lever body (2) being carried on said surface of said setting plateau (3) with said first end portion being received in said recess portion (30) of said setting plateau (3);
said lever body (2) being pivotally supported at said second end portion thereof to said lever base (1) by a supporting shaft (4), whereby said lever body (2) can be pivoted in such a direction (c) so as to be away from said surface of said setting plateau (3); and
second return spring means (5) mounted on said supporting shaft (4);
said operating shaft (70) being received in said boss portion (10) of said lever base (1);
wherein when said lever body (2) is pivoted in said direction (c) so as to be away from said surface of said setting plateau (3) against an action of said second return spring means (5) and swung about said opening (36) of said setting plateau (3) in a predetermined direction (a) in such a manner that said first end portion gets over one (31) of said spaced apart bank portions (31,32), said operating shaft (70) is rotated against an action of said first return spring means (73), whereby said driven mechanism is actuated.

2. An operating lever according to claim 1 wherein said lever base (1) has a jaw portion (11) projecting in such a direction as to be off-centered relative to said boss portion (10), and a substantially U-shaped recess portion (12) formed in said jaw portion (11), said lever body (2) being pivotally supported to said lever base (1) by said supporting shaft (4) in a condition in which said second end portion of said lever body (2) is received in said substantially U-shaped recess portion (12) of said lever base (1) and spaced away from an innermost region of said substantially U-shaped recess portion (12) at a distance (g₁) allowing the pivotal movement of said lever body (2).

3. An operating lever according to claim 1 or claim 2 wherein said lever body (2) has a circular arc-shaped projecting edge (20a) which is slid on said one (31) of said spaced apart bank portions (31,32) when said lever body (2) is swung in said predetermined direction (a).

4. An operating lever according to any preceding claim wherein said first end portion of said lever body (2) is received in said recess portion (30) of said setting plateau (3) with a space (g₂) being left between said one (31) of said spaced apart bank portions (31,32) and a side of said first end portion, whereby said lever body (2) can be shifted laterally, said side of said first end portion having an engaging protrusion (21) and said one (31) of said spaced apart bank portions (31,32) having an engaging hole (33) formed in a side thereof.

5. An operating lever according to any preceding claim wherein the other (32) of said spaced apart bank portions (31,32) is bulged largely as compared to said one (31) of said spaced apart bank portions (31,32).

6. A seat comprising:
a seat cushion (C);
a seat back (B);
a slide rail mechanism (U,L) for allowing the seat to be slid along the slide rail mechanism (U,L);
a locking mechanism (D) for locking said seat with respect to said slide rail mechanism (U,L) and preventing said seat from sliding along said slide rail mechanism (U,L);
a lock-releasing mechanism for releasing said seat from a condition in which the seat is locked with respect to said slide rail mechanism (U,L) by said locking mechanism (D), and allowing said seat to become slidable along said slide rail mechanism (U,L);
said lock-releasing mechanism including an operating shaft (70) urged by first return spring means (73); and
an operating lever (R) provided at an upper portion of a side of said seat back (B) for actuating said lock-releasing mechanism;
said operating lever (R) comprising:
a lever base (1) having a bass portion (10);
a lever body (2) having first and second end portions;
a setting plateau (3) for carrying said lever base (1) and said lever body (2) thereon;
said setting plateau (3) having a pair of spaced apart bank portions (31,32) bulged vertically from a surface thereof, a recess portion (30) between said spaced apart bank portions (31,32) and an opening (36) formed therein;
said lever base (1) being carried on said surface of said setting plateau (3) with said boss portion (10) being rotatably received in said opening (36) of said setting plateau (3);
said lever body (2) being carried on said surface of said setting plateau (3) with said first end portion being received in said recess portion (30) of said setting plateau (3);
said lever body (2) being pivotally supported at said second end portion thereof to said lever base (1) by a supporting shaft (4), whereby said lever body (2) can be pivoted in such a direction (c) so as to be away from said surface of said setting plateau (3); and
second return spring means (5) mounted on said supporting shaft (4);
said operating shaft (70) being received in said boss portion (10) of said lever base (1);
wherein when said lever body (2) is pivoted in said direction (c) so as to be away from said surface of said setting plateau (3) against an action of said second return spring means (5) and swung about said opening (36) of said setting plateau (3) in a predetermined direction (a) in such a manner that said first end portion gets over one (31) of said spaced apart bank portions (31,32), said operating shaft (70) is rotated against an action of said first return spring means (73), whereby said lock-releasing mechanism is actuated.

7. A seat according to claim 6 wherein said lever base (1) has a jaw portion (11) projecting in such a direction as to be off-centered relative to said boss portion (10), and a substantially U-shaped recess portion (12) formed in said jaw portion (11), said lever body (2) being pivotally supported to said lever base (1) by said supporting shaft (4) in a condition in which said second end portion of said lever body (2) is received in said substantially U-shaped recess portion (12) of said lever base (1) and spaced away from an innermost region of said substantially U-shaped recess portion (12) at a distance (g₁) allowing the pivotal movement of said lever body (2).

8. A seat according to claim 6 or claim 7 wherein said lever body (2) has a circular arc-shaped projecting edge (20a) which is slid on said one (31) of said spaced apart bank portions (31,32) when said lever body (2) is swung in said predetermined direction (a).

9. A seat according to any of claims 6 to 8 wherein said first end portion of said lever body (2) is received in said recess portion (30) of said setting plateau (3) with a space (g₂) being left between said one (31) of said spaced apart bank portions (31,32) and a side of said first end portion, whereby said lever body (2) can be shifted laterally, said side of said first end portion having an engaging protrusion (21) and said one (31) of said spaced apart bank portions (31,32) having an engaging hole (33) formed in a side thereof.

10. A seat according to any of claims 6 to 9 wherein the other (32) of said spaced apart bank portions (31,32) is bulged largely as compared to said one (31) of said spaced apart bank portions (31,32).

## Patentansprüche

1. Bedienungshebel (R) zum Betätigen eines Antriebsmechanismus mit einer Bedienungswelle (70), welche durch eine erste Rückholfedereinrichtung (73) angetrieben wird, wobei der Bedienungshebel (R) folgende Merkmale aufweist:
eine Hebelbasis (1) mit einem Vorsprungsabschnitt (10);
einen Hebelkörper (2) mit ersten und zweiten Endabschnitten;
eine Sitzplatte (3) zum Tragen der Hebelbasis (1) und des Hebelkörpers (2) hierauf;
wobei die Sitzplatte (3) ein paar beabstandeter Böschungsabschnitte (31, 32), die sich von einer Oberfläche hiervon vertikal wölben, einen Ausnehmungsabschnitt (30) zwischen den beabstandeten Böschungsabschnitten (31, 32) und eine darin gebildete Öffnung (36) aufweist;
wobei die Hebelbasis (1) auf der Oberfläche der Sitzplatte (3) getragen wird, wobei der Vorsprungsabschnitt (10) drehbar in der Öffnung (36) der Sitzplatte (3) aufgenommen wird;
wobei der Hebelkörper (2) auf der Oberfläche der Sitzplatte (3) getragen wird, wobei der erste Endabschnitt in dem Ausnehmungsabschnitt (30) der Sitzplatte (3) aufgenommen wird;
wobei der Hebelkörper (2) an dem zweiten Endabschnitt hiervon schwenkbar zu der Hebelbasis (1) durch eine Trägerwelle (4) getragen wird, wodurch der Hebelkörper (2) in einer solchen Richtung (c) geschwenkt werden kann, um von der Oberfläche der Sitzplatte (3) entfernt zu sein; und
mit einer zweiten Rückholfedereinrichtung (5), welche auf der Trägerwelle (4) montiert ist;
wobei die Bedienungswelle (70) in dem Vorsprungsabschnitt (10) der Hebelbasis (1) aufgenommen ist;
wobei, wenn der Hebelkörper (2) in der Richtung (c) gegen eine Aktion der zweiten Rückholfedereinrichtung (5) geschwenkt wird, so dass er von der Oberfläche der Sitzplatte (3) entfernt ist, und über die Öffnung (36) der Sitzplatte (3) in einer vorbestimmten Richtung (a) in der Art gedreht wird, dass der erste Endabschnitt über einen (31) der genannten beabstandeten Böschungsabschnitte (31, 32) gelangt, die Bedienungswelle (70) gegen eine Aktion der ersten Rückholfedereinrichtung (73) gedreht wird, wodurch der Antriebsmechanismus betätigt wird.

2. Bedienungshebel nach Anspruch 1, bei dem die Hebelbasis einen Klauenabschnitt (11) aufweist, welcher in einer Richtung vorragt, so dass er relativ zu dem Vorsprungsabschnitt (10) außermittig liegt, und der einen im Wesentlichen U-förmigen Ausnehmungsabschnitt (12) aufweist, welcher in dem Klauenabschnitt (11) gebildet ist, wobei der Hebelkörper (2) auf der Hebelbasis (1) über die Trägerwelle (4) in einer Stellung, in welcher der zweite Endabschnitt des Hebelkörpers (2) in dem im Wesentlichen U-förmigen Ausnehmungsabschnitt (12) der Hebeibasis (1) aufgenommen und von einem innersten Bereich des im Wesentlichen U-förmigen Ausnehmungsabschnitts (12) um einen Abstand (g₁) beabstandet ist, so dass die Schwenkbewegung des Hebelkörpers (2) ermöglicht ist, schwenkbar getragen wird.

3. Bedienungshebel nach Anspruch 1 oder Anspruch 2, bei dem der Hebelkörper (2) eine kreisförmige bogenartig vorragende Kante (20a) aufweist, welche auf dem einen (31) der beabstandeten Böschungsabschnitte (31, 32) verrutscht wird, wenn der Hebelkörper (2) in der vorbestimmten Richtung (a) gedreht wird.

4. Bedienungshebel nach einem der vorhergehenden Ansprüche, wobei der erste Endabschnitt des Hebelkörpers (2) in dem Ausnehmungsabschnitt (30) der Sitzplatte (3) aufgenommen wird, mit einem Raum (g₂), welcher zwischen dem einen (31) der beabstandeten Böschungsabschnitte (31, 32) und einer Seite des ersten Endabschnitts gelassen wird, wodurch der Hebelkörper (2) seitlich verschoben werden kann, wobei die Seite des ersten Endabschnitts einen Kontaktvorsprung (21) aufweist und der eine (31) der beabstandeten Böschungsabschnitte (31, 32) ein in einer Seite hiervon gebildetes Kontaktloch (33) aufweist.

5. Bedienungshebel nach einem der vorhergehenden Ansprüche, wobei der andere (32) der beabstandeten Böschungsabschnitte (31, 32) im Vergleich zu dem einen (31) der beabstandeten Böschungsabschnitte (31, 32) stark gewölbt ist.

6. Sitz, welcher folgende Merkmale aufweist:
ein Sitzkissen (C);
eine Sitzlehne (B);
einen Gleitschienenmechanismus (U, L), um zu ermöglichen, dass der Sitz entlang des Gleitschienenmechanismus (U, L) verrutscht wird;
einen Verriegelungsmechanismus (D) zum Verriegeln des Sitzes in Bezug auf den Gleitschienenmechanismus (U, L) und zum Verhindern, dass der Sitz entlang des Gleitschienenmechanismus (U, L) verrutscht;
einen Riegellösemechanismus zum Lösen des Sitzes aus einem Zustand, in welchem der Sitz in Bezug auf den Gleitschienenmechanismus (U, L) durch den Verriegelungsmechanismus (D) verriegelt ist, und zum Ermöglichen, dass der Sitz entlang des Gleitschienenmechanismus (U, L) verschiebbar wird;
wobei der Riegellösemechanismus eine Bedienungswelle (70) aufweist, welche von einer ersten Rückholfedereinrichtung (73) angetrieben wird; und mit einem Bedienungshebel (R), welcher an einem oberen Abschnitt einer Seite der Sitzlehne (B) zum Betätigen des Riegelmechanismus' vorgesehen ist;
wobei der Bedienungshebel (R) folgende Merkmale aufweist:
eine Hebelbasis (1) mit einem Vorsprungabschnitt (10);
einen Hebelkörper (2) mit ersten und zweiten Endabschnitten;
eine Sitzplatte (3) zum Tragen der Hebelbasis (1) und des Hebelkörpers (2) hierauf;
wobei die Sitzplatte (3) ein paar beabstandeter Böschungsabschnitte (31, 32), die sich von einer Oberfläche hiervon vertikal wölben, einen Ausnehmungsabschnitt (30) zwischen den beabstandeten Böschungsabschnitten (31, 32) und eine darin gebildete Öffnung (36) aufweist;
wobei die Hebelbasis (1) auf der Oberfläche der Sitzplatte (3) getragen wird, wobei der Vorsprungsabschnitt (10) drehbar in der Öffnung (36) der Sitzplatte (3) aufgenommen wird;
wobei der Hebelkörper (2) auf der Oberfläche der Sitzplatte (3) getragen wird, wobei der erste Endabschnitt in dem Ausnehmungsabschnitt (30) der Sitzplatte (3) aufgenommen wird;
wobei der Hebelkörper (2) an dem zweiten Endabschnitt hiervon schwenkbar zu der Hebelbasis (1) durch eine Trägerwelle (4) getragen wird, wodurch der Hebelkörper (2) in einer solchen Richtung (c) geschwenkt werden kann, um von der Oberfläche der Sitzplatte (3) entfernt zu sein; und
mit einer zweiten Rückholfedereinrichtung (5), welche auf der Trägerwelle (4) montiert ist;
wobei die Bedienungswelle (70) in dem Vorsprungsabschnitt (10) der Hebelbasis (1) aufgenommen ist;
wobei, wenn der Hebelkörper (2) in der Richtung (c) gegen eine Aktion der zweiten Rückholfedereinrichtung (5) geschwenkt wird, so dass er von der Oberfläche der Sitzplatte (3) entfernt ist und über die Öffnung (36) der Sitzplatte (3) in einer vorbestimmten Richtung (a) in der Art gedreht wird, dass der erste Endabschnitt über einen (31) der genannten beabstandeten Böschungsabschnitte (31, 32) gelangt, die Bedienungswelle (70) gegen eine Aktion der ersten Rückholfedereinrichtung (73) gedreht wird, wodurch der Antriebsmechanismus betätigt wird.

7. Sitz nach Anspruch 6, bei dem die Hebelbasis einen Klauenabschnitt (11) aufweist, welcher in einer Richtung vorragt, so dass er relativ zu dem Vorsprungsabschnitt (10) außermittig liegt, und der einen im Wesentlichen U-förmigen Ausnehmungsabschnitt (12) aufweist, welcher in dem Klauenabschnitt (11) gebildet ist, wobei der Hebelkörper (2) auf der Hebelbasis (1) über die Trägerwelle (4) in einer Stellung, in welcher der zweite Endabschnitt des Hebelkörpers (2) in dem im Wesentlichen U-förmigen Ausnehmungsabschnitt (12) der Hebelbasis (1) aufgenommen und von einem innersten Bereich des im Wesentlichen U-förmigen Ausnehmungsabschnitts (12) um einen Abstand (g₁) beabstandet ist, so dass die Schwenkbewegung des Hebelkörpers (2) ermöglicht ist, schwenkbar getragen wird.

8. Sitz nach Anspruch 6 oder Anspruch 7, bei dem der Hebelkörper (2) eine kreisförmige bogenartig vorragende Kante (20a) aufweist, welche auf dem einen (31) der beabstandeten Böschungsabschnitte (31, 32) verrutscht wird, wenn der Hebelkörper (2) in der vorbestimmten Richtung (a) gedreht wird.

9. Sitz nach einem der Ansprüche 6 bis 8, wobei der erste Endabschnitt des Hebelkörpers (2) in dem Ausnehmungsabschnitt (30) der Sitzplatte (3) aufgenommen wird, mit einem Raum (g₂), welcher zwischen dem einen (31) der beabstandeten Böschungsabschnitte (31, 32) und einer Seite des ersten Endabschnitts gelassen wird, wodurch der Hebelkörper (2) seitlich verschoben werden kann, wobei die Seite des ersten Endabschnitts einen Kontaktvorsprung (21) aufweist und der eine (31) der beabstandeten Böschungsabschnitte (31, 32) ein in einer Seite hiervon gebildetes Kontaktloch (33) aufweist.

10. Sitz nach einem der Ansprüche 6 bis 9, wobei der andere (32) der beabstandeten Böschungsabschnitte (31, 32) im Vergleich zu dem einen (31) der beabstandeten Böschungsabschnitte (31, 32) stark gewölbt ist.

## Revendications

1. Levier d'actionnement (R) pour actionner un mécanisme entraîné, comportant un arbre d'actionnement (70) poussé par des premiers moyens formant ressort de rappel (73), ledit levier d'actionnement (R) comprenant :
une base de levier (1) comportant une partie en saillie (10) ;
un corps de levier (2) comportant des première et deuxième parties d'extrémité ;
un plateau de montage (3) pour supporter ladite base de levier (1) et ledit corps de levier (2) sur celui-ci ;
ledit plateau de montage (3) comportant une paire de parties de banc mutuellement espacées (31, 32) renflées verticalement à partir d'une surface de celles-ci, une partie de cavité (30) entre lesdites parties de banc mutuellement espacées (31, 32) et une ouverture (36) formée dans celui-ci ;
ladite base de levier (1) étant portée sur ladite surface dudit plateau de montage (3) avec ladite partie en saillie (10) qui est reçue de façon à pouvoir tourner dans ladite ouverture (36) dudit plateau de montage (3) ;
ledit corps de levier (2) étant supporté sur ladite surface dudit plateau de montage (3), avec ladite première partie d'extrémité qui est reçue dans ladite partie de cavité (30) dudit plateau de montage (3) ;
ledit corps de levier (2) étant supporté de façon à pouvoir pivoter au niveau de ladite deuxième partie d'extrémité de celui-ci sur ladite base de levier (1) par un arbre de support (4), grâce à quoi on peut faire pivoter ledit corps de levier (2) dans une direction (c) l'éloignant de ladite surface dudit plateau de disposition (3) ; et
des deuxièmes moyens formant ressort de rappel (5) montés sur ledit arbre de support (4) ;
ledit arbre d'actionnement (70) étant reçu dans ladite partie en saillie (10) de ladite base de levier (1) ;
dans lequel, lorsque l'on fait pivoter ledit corps de levier (2) dans ladite direction (c) l'éloignant de ladite surface dudit plateau de montage (3) à l'encontre d'une action desdits deuxièmes moyens formant ressort de rappel (5) et qu'on le fait osciller autour de ladite ouverture (36) dudit plateau de montage (3) dans une direction prédéterminée (a) de telle sorte que ladite première partie d'extrémité passe au-dessus de l'une (31) desdites parties de banc mutuellement espacées (31, 32), ledit arbre d'actionnement (70) tourne à l'encontre d'une action desdits premiers moyens formant ressort de rappel (73), grâce à quoi ledit mécanisme entraîné est actionné.

2. Levier d'actionnement selon la revendication 1,
dans lequel ladite base de levier (1) comporte une partie de mâchoire (11) faisant saillie dans une direction telle qu'elle soit excentrée par rapport à ladite partie en protubérance (10), et une partie de cavité sensiblement en forme de U (12) formée dans ladite partie de mâchoire (11), ledit corps de levier (2) étant supporté de façon à pouvoir pivoter sur ladite base de levier (1) par ledit arbre de support (4) dans une condition dans laquelle ladite deuxième partie d'extrémité dudit corps de levier (2) est reçue dans ladite partie de cavité sensiblement en forme de U (12) de ladite base de levier (1) et éloignée d'une région située le plus à l'intérieur de ladite partie de cavité sensiblement en forme de U (12) d'une distance (g₁) permettant le mouvement de pivotement dudit corps de levier (2).

3. Levier d'actionnement selon la revendication 1 ou la revendication 2, dans lequel ledit corps de levier (2) comporte un bord saillant en forme d'arc circulaire (20a) que l'on fait coulisser sur ladite première (31) desdites parties de banc mutuellement espacées (31, 32) lorsque l'on fait osciller ledit corps de levier (2) dans ladite direction prédéterminée (a).

4. Levier d'actionnement selon l'une quelconque des revendications précédentes, dans lequel ladite première partie d'extrémité dudit corps de levier (2) est reçue dans ladite partie de cavité (30) dudit plateau de montage (3), avec un espace (g₂) qui est laissé entre ladite première (31) desdites parties de banc mutuellement espacées (31, 32) et un côté de ladite première partie d'extrémité, grâce à quoi ledit corps de levier (2) peut être décalé latéralement, ledit côté de ladite première partie d'extrémité comportant une saillie d'engagement(21) et ladite première (31) desdites parties de banc mutuellement espacées (31, 32) comportant un trou d'engagement (33) formé dans un côté de celle-ci.

5. Levier d'actionnement selon l'une quelconque des revendications précédentes, dans lequel l'autre (32) desdites parties de banc mutuellement espacées (31, 32) est considérablement renflée par rapport à ladite première (31) desdites parties de banc mutuellement espacées (31, 32).

6. Siège, comprenant :
un coussin de siège (C) ;
un dossier de siège (B) ;
un mécanisme de rail de coulissement (U, L) pour permettre de faire coulisser le siège le long du mécanisme de rail de coulissement (U, L) ;
un mécanisme de verrouillage (D) pour verrouiller ledit siège par rapport audit mécanisme de rail de coulissement (U, L) et empêcher ledit siège de coulisser le long dudit mécanisme de rail de coulissement (U, L) ;
un mécanisme de libération de verrouillage pour libérer ledit siège d'une condition dans laquelle le siège est verrouillé par rapport audit mécanisme de rail de coulissement (U, L) par ledit mécanisme de verrouillage (D), et permettre audit siège de pouvoir coulisser le long dudit mécanisme de rail de coulissement (U, L) ;
ledit mécanisme de libération de verrouillage comprenant un arbre d'actionnement (70) poussé par des premiers moyens formant ressort de rappel (73) ; et
un levier d'actionnement (R) disposé dans une partie supérieure d'un côté dudit dossier de siège (B) pour actionner ledit mécanisme de libération de verrouillage ;
ledit levier d'actionnement (R) comprenant :
une base de levier (1) comportant une partie en saillie (10) ;
un corps de levier (2) comportant des première et deuxième parties d'extrémité ;
un plateau de support (3) pour supporter ladite base de levier (1) et ledit corps de levier (2) sur celui-ci ;
ledit plateau de support (3) comportant une paire de parties de banc mutuellement espacées (31, 32) verticalement renflées à partir d'une surface de celles-ci, une partie de cavité (30) entre lesdites parties de banc mutuellement espacées (31, 32) et une ouverture (36) formée à l'intérieur de celui-ci ;
ladite base de levier (1) étant supportée sur ladite surface dudit plateau de support (3), avec ladite partie en saillie (10) qui est reçue de façon à pouvoir tourner dans ladite ouverture (36) dudit plateau de montage (3) ;
ledit corps de levier (2) étant supporté sur ladite surface dudit plateau de montage (3), avec ladite première partie d'extrémité qui est reçue dans ladite partie de cavité (30) dudit plateau de montage (3) ;
ledit corps de levier (2) étant supporté de façon à pouvoir pivoter au niveau de ladite deuxième partie d'extrémité de celui-ci sur ladite base de levier (1) par un arbre de support (4), grâce à quoi on peut faire pivoter ledit corps de levier (2) dans une direction (c) l'éloignant de ladite surface dudit plateau de support (3) ; et
des deuxièmes moyens formant ressort de rappel (5) montés sur ledit arbre de support (4) ;
ledit arbre d'actionnement (70) étant reçu dans ladite partie en saillie (10) de ladite base de levier (1) ;
dans lequel, lorsque l'on fait pivoter ledit corps de levier (2) dans ladite direction (c) l'éloignant de ladite surface dudit plateau de support (3) à l'encontre d'une action desdits deuxièmes moyens formant ressort de rappel (5) et qu'on le fait osciller autour de ladite ouverture (36) dudit plateau de support (3) dans une direction prédéterminée (a) de telle sorte que ladite première partie d'extrémité passe au-dessus de l'une (31) desdites parties de banc mutuellement espacées (31, 32), ledit arbre d'actionnement (70) tourne à l'encontre d'une action desdits premiers moyens formant ressort de rappel (73), grâce à quoi ledit mécanisme de libération de verrouillage est actionné.

7. Siège selon la revendication 6, dans lequel ladite base de levier (1) comporte une partie de mâchoire (11) faisant saillie dans une direction telle qu'elle soit excentrée par rapport à ladite partie en saillie (10), et une partie de cavité sensiblement en forme de U (12) formée dans ladite partie de mâchoire (11), ledit corps de levier (2) étant supporté de façon à pouvoir pivoter sur ladite base de levier (1) par ledit arbre de support (4) dans une condition dans laquelle ladite deuxième partie d'extrémité dudit corps de levier (2) est reçue dans ladite partie de cavité sensiblement en forme de U (12) de ladite base de levier (1) et éloignée d'une région située le plus à l'intérieur de ladite partie de cavité sensiblement en forme de U (12) d'une distance (g₁) permettant le mouvement de pivotement dudit corps de levier (2).

8. Siège selon la revendication 6 ou la revendication 7, dans lequel ledit corps de levier (2) comporte un bord saillant en forme d'arc circulaire (20a) qui coulisse sur ladite première (31) desdites parties de banc mutuellement espacées (31, 32) lorsque l'on fait osciller ledit corps de levier (2) dans ladite direction prédéterminée (a).

9. Siège selon l'une quelconque des revendication 6 à 8, dans lequel ladite première partie d'extrémité dudit corps de levier (2) est reçue dans ladite partie de cavité (30) dudit plateau de support (3), avec un espace (g₂) qui est laissé entre ladite première (31) desdites parties de banc mutuellement espacées (31, 32) et un côté de ladite première partie d'extrémité, grâce à quoi ledit corps de levier (2) peut être décalé latéralement, ledit côté de ladite première partie d'extrémité comportant une saillie d'engagement (21) et ladite première (31) desdites parties de banc mutuellement espacées (31, 32) comportant un trou d'engagement (33) formé dans un côté de celle-ci.

10. Siège selon l'une quelconque des revendications 6 à 9, dans lequel l'autre (32) desdites parties de banc mutuellement espacées (31, 32) est considérablement renflée par rapport à ladite première (31) desdites parties de banc mutuellement espacées (31, 32).
